# EUROPEAN PATENT APPLICATION

(11) **EP 3 514 492 A1**
(43) Date of publication of application: **24.07.2019**
(21) Application number: 16916090.0
(22) Date of filing: 18.10.2016
(51) Int. Cl.: G01C 21/00, G09F 3/02

(54) **ROAD SIGN FOR DETERMINING POSITION OF ROBOT, DEVICE, AND METHOD FOR DISTINGUISHING LABELS**

(30) Priority: 14.09.2016 CN 201610825488
(71) Applicant: HIT ROBOT GROUP SHANGHAI CO., LTD., Shanghai Shanghai (CN)
(72) Inventor: QIAO, Hui, Shanghai 201206 (CN); HE, Zhaowen, Shanghai 201206 (CN)
(74) Representative: 2K Patentanwälte Blasberg Kewitz & Reichel
(86) International application number: PCT/CN2016/102383
(87) International publication number: WO 2018/049710

(57) **Abstract**

A road sign for determining the position of a robot, a device, and a method for distinguishing labels with different functions in a road sign, wherein the road sign is composed of more than one label with different functions; a label is composed of more than one mark; and the marks are coated with a conversion material capable of exciting light with a specific wavelength, or made of the conversion material. Excited light can be used to excite the conversion material to emit emission light, and the road sign is recognized by collecting the emission light, so that interference when the road sign is recognized can be effectively reduced.

## Description

### FIELD OF THE INVENTION

The present invention relates to a robot, and more particularly to a road sign for determining the position of a robot, a device, and a method for distinguishing labels with different functions in a road sign.

### BACKGROUND OF THE INVENTION

When a robot is moving, it needs to determine its position in the map for path planning. The commonly used method for determining the position is to use artificial road signs.

Commonly used artificial road signs include passive road signs and active road signs. The active road sign has a light source therein. The robot can effectively identify the road sign by collecting the light emitted by the light source. However, due to the built-in light source, this kind of road sign usually needs to be connected to a power source, resulting in that the setting of the road sign is complicated and expensive.

Passive road signs usually reflect natural light or other projected light sources through a smooth reflective surface, and the robot collects the reflected light to identify the road signs. However, passive road signs that use natural light sources cannot be used in a place that the light is not enough. For example, at night, passive road signs that use natural light sources cannot be used. Even passive road signs that use other projection sources can solve the above problems, but they are also interfered by natural light. When there are other reflectors similar to road signs in the room, the robot will treat these reflectors as part of the road signs, which increases the difficulty of identifying road signs or causes identification errors.

Therefore, the road signs of the prior art are complicated, expensive, or susceptible to interference.

### SUMMARY OF THE INVENTION

The primary object of the present invention is to solve the technical problem that the road sign of the prior art is complicated, expensive, or susceptible to interference.

In order to solve the problem, the present invention provides a road sign for determining the position of a robot. The road sign consists of more than one label with different functions. The label consists of more than one mark. The mark is coated with a conversion material capable of exciting light with a specific wavelength or made of the conversion material.

Furthermore, the road sign includes:
a coded label, the coded label consisting of more than one mark for determining an individual road sign to distinguish the individual road sign from other road signs; and
a coordinate label, the coordinate label consisting of more than one mark for determining position information of each mark of the coded label.

Furthermore, the coordinate label is composed of a mark at an arbitrary position and at least two marks on an X-axis and a Y-axis centered on the mark.

Furthermore, the road sign is in the form of a two-dimensional code or in the form of a bar code.

Furthermore, the road sign is based on shape information, numerals, letters, or patterns.

Furthermore, the road sign further includes a check label. The check label consists of more than one mark. The check label is used to check whether the identity of the individual road sign is correct or not.

Furthermore, the conversion material is an up-conversion luminescent material or a down-conversion luminescent material.

Furthermore, the conversion material is a luminescent material.

Furthermore, the luminescent material is a long-lasting luminescent material.

Furthermore, the label with different functions is coated with a different conversion material or made of a different conversion material.

Furthermore, each mark is coated with more than two different conversion materials or made of more than two different conversion materials.

Furthermore, at least one of the conversion materials coated on the label with different functions is a different conversion material; or at least one of the conversion materials that make the label with different functions is a different conversion material.

Furthermore, the conversion material has a rough surface.

Furthermore, the conversion material is a material having a β-sialon represented by the formula Si_{6-z}Al_{z}O_{z}N_{8-z} as a matrix, in which Eu and R elements are solid solutions in the matrix; wherein 0.2≤z≤2.0, the R element is one or two of Y, Sc, La, Gd, and Lu; molar composition of the Eu and R elements satisfies the following condition: 0.8≤(Eu/Eu+R)<1.

Furthermore, the conversion material is a material of the formula M₂Y₈₍GeO₄)₆S₂:xHo³⁺, wherein the value of x is 0.01 to 0.06.

Furthermore, the conversion material is a material of the formula Ca_{2.83}Sc₂Si₃O₁₂:0-1Ce³⁺, 0.07Nd³⁺.

Compared with the prior art, the technical solution of the present invention has the following advantages:

The conversion material can be excited by excitation light to emit light. The road sign can be identified by collecting the emitted light, which can effectively reduce the interference when the road sign is identified.

The present invention further provides a device for determining the position of a robot, comprising:
the above road sign, the road sign being disposed in a space in which the robot is located;
a light source, the light source projecting light onto the road sign such that the conversion material excites light with a specific wavelength;
a camera, the camera capturing the road sign and obtaining a binary image;
a road sign detector, the road sign detector identifying the road sign according to the image of the road sign collected by the camera; and
a position detector, the position detector determining the position of the robot through the road sign identified by the road sign detector.

Furthermore, the device further comprises an optical filter. The emitted light excited by the conversion material is permeable to the optical filter. The camera collects the light passing through the optical filter to capture the road sign.

Furthermore, the optical filter includes two or more optical filters; or the optical filter has a plurality of portions, each portion is permeable to different light.

Furthermore, the two or more optical filters are switched manually or mechanically automatically.

Furthermore, the device further comprises a light sensor for detecting light around the robot.

Furthermore, the light source includes two or more light sources, and the wavelengths of the light emitted by the respective light sources are different; or the light source is capable of adjusting the wavelength of the light.

Furthermore, the light source, the camera, the optical filter, the road sign detector and the position detector are all disposed on the robot, and the road sign is disposed on a ceiling of an indoor space.

Compared with the prior art, the technical solution of the present invention has the following advantages:

The light source projects light onto the conversion material to emit light. The camera captures the emitted light to obtain a binary image of the road sign. The road sign detector identifies the road sign. Finally, the position detector determines the position of the robot through the road sign identified by the road sign detector. This can effectively reduce the interference when the road sign is identified.

The present invention further provides a method for distinguishing labels with different functions in a road sign. The labels with different functions are coated with different conversion materials or made of different conversion materials. The conversion materials excite light with a specific wavelength. The method comprises:
(1) projecting an excitation light onto the road sign such that one of the conversion materials of the road sign excites emitted light;
(2) selecting an optical filter, the emitted light in the step 1 being permeable to the optical filter;
(3) using a camera to collect the emitted light passing through the optical filter in step 2 so that an image of a corresponding one of the labels is obtained and the corresponding label is marked;
(4) repeating steps 1 through 3 until all the labels with different functions in the road sign are collected and marked;
(5) combining the images of all the collected labels into one image.

Furthermore, the method, after step 5, further comprises identifying the image obtained in step 5 for determining the location where the robot is located.

Compared with the prior art, the technical solution of the present invention has the following advantages:

The technical solution collects different labels step-by-step, which can effectively distinguish different labels and avoid using a complicated algorithm to distinguish the labels.

### BRIEF DESCRIPTION OF THE DRAWINGS

FIG. 1 is a schematic diagram of a road sign in the form of a two-dimensional code according to a first embodiment of the present invention;
FIG. 2 is a schematic diagram of a road sign in the form of a bar code according to a second embodiment of the present invention;
FIG. 3 is a schematic diagram of a road sign based on shape information according to a third embodiment of the present invention;
FIG. 4 is a schematic diagram of a road sign based on numerals/letters according to a third embodiment of the present invention; and
FIG. 5 is a block diagram of a device for determining the position of a robot according to a sixth embodiment of the present invention.

### DETAILED DESCRIPTION OF THE PREFERRED EMBODIMENTS

In order to understand the above objects, features and advantages of the present invention more clearly, embodiments of the present invention will now be described, by way of example only, with reference to the accompanying drawings.

In the present invention, when a numerical value is described by using "more than", the numerical value includes the numerical value represented by the endpoint. For example, "one or more" means: one, or other values greater than one.

In order to determine the location of the robot, more than one road sign is usually set in the space according to the space in which the robot is located and the environment. Each road sign is different from another one. Each road sign represents a specific location of the space. By identifying the road sign, it is possible to know the location of the robot and achieve the purpose of positioning, providing a basis for robot navigation.

In the present invention, the road sign is composed of more than one label with different functions. The label is classified according to different functions, for example, a road sign in the form of a two-dimensional code may include a coded label and a coordinate label. In a road sign based on patterns, the label may have only one type.

The label consists of more than one mark. The mark is the smallest component of the road sign. For example, in a road sign in the form of a two-dimensional code, the coordinate label may be composed of three marks to determine the origin point, the X-axis and the Y-axis of the Cartesian coordinate system.

In the present invention, a conversion material A is defined as a material having a β-sialon represented by the formula Si_{6-z}Al_{z}O_{z}N_{8-z} as a matrix, in which Eu and R elements are solid solutions in the matrix; wherein 0.2≤z≤2.0, the R element is one or two of Y, Sc, La, Gd, and Lu. The molar composition of the Eu and R elements satisfies the following condition: 0.8≤(Eu/Eu+R)<1. This conversion material emits green light between 510 and 550 nm under blue light excitation. This material has been disclosed in Chinese Patent Application No. CN201410742644.8.

A conversion material B is defined as a material of the formula M₂Y₈₍GeO₄)₆S₂:xHo³⁺, wherein the value of x is 0.01 to 0.06. This conversion material excites the emission of green light under the excitation of long-wave radiation from infrared light to green light. This material has been disclosed in Chinese Patent Application No. CN201410109812.X.

A conversion material C is defined as a material of the formula Ca_{2.83}Sc₂Si₃O₁₂:0.1Ce³⁺, 0.07Nd³⁺. When the conversion material is excited by blue light, it can excite infrared light. The material was disclosed in the article, Issue 10, Volume 38, in the Journal of Silicate, October 2010. The authors are: Wan Wen-jiao, Xiao Quan-lan, Yang Chuang-tao and Meng Jian-xin, entitled " Ca₃Sc₂Si₃O₁₂:Ce³⁺, Nd³⁺ Near Infrared Phosphor Preparation and Luminescent Properties".

### First embodiment

This embodiment provides a road sign for determining the position of a robot. The road sign consists of more than one label with different functions. The label consists of more than one mark. The mark is coated with a conversion material capable of exciting light with a specific wavelength.

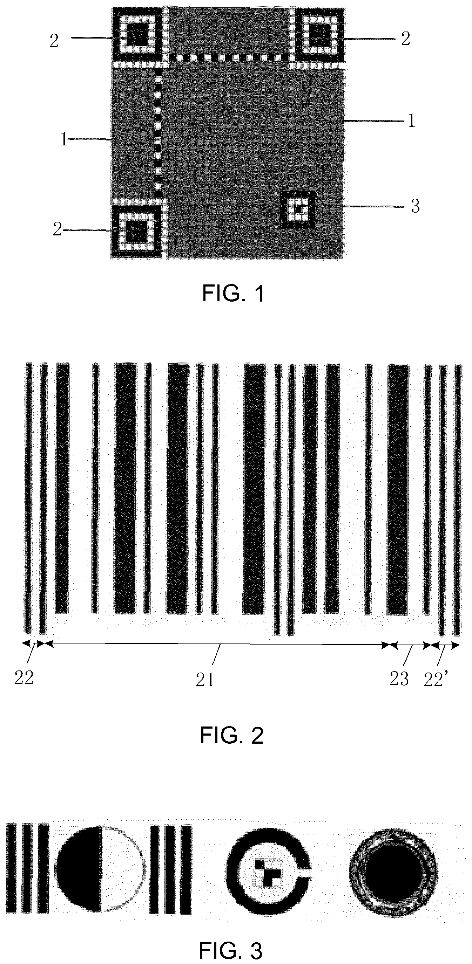

Referring to FIG. 1, the road sign includes a coded label 1 and a coordinate label 2. The coded label 1 and the coordinate label 2 of the road sign are two labels with different functions in the road sign.

The marks of the coded label 1 and the coordinate label 2 are coated with the conversion material. The conversion material coated on the marks of the coded label 1 and the coordinate label 2 may be the same or different.

In this embodiment, the marks of the coded label 1 and the coordinate label 2 are coated with the same conversion material.

The same conversion material means that these conversion materials can emit the same emitted light under the same excitation light.

In this embodiment, the conversion material is coated only on the front of the road sign. The front is the side on which the robot can collect the road sign. When the road sign is placed on the ceiling of the space in which the robot is located, the front is the downward side.

In other embodiments, the conversion material may be coated on the front and other sides of the road sign.

In other embodiments, the road sign may be placed at other locations in the space in which the robot is located, such as on a wall or on a floor, as long as the robot can collect the road sign.

The road sign shown in FIG. 1 is a road sign in the form of a matrix two-dimensional code.

In other embodiments, the road sign in the form of a two-dimensional code may be a road sign in the form of a regular polygon two-dimensional code or a road sign in the form of an irregular figure two-dimensional code.

The coded label 1 consists of more than one mark for determining an individual road sign to distinguish the individual road sign from other road signs. The individual road sign is a specific road sign in all road signs.

The number and position of the marks constituting the coded label 1 determine the identity of the road sign. In the space in which the robot is located, the identity of each road sign is different, that is, the number and position of the marks constituting the coded label 1 will not be exactly the same.

Because the coded label 1 determines the identity of the road sign by the position and number of its marks, the position of each mark in the coded label 1 is very important.

In this embodiment, the coordinate label 2 consists of more than one mark, and its function is to determine the position information of each mark in the coded label 1.

After the position and number of the marks in the coded label 1 are determined, they need to be encoded.

In this embodiment, the road sign in the form of a two-dimensional code adopts a common two-dimensional code encoding method, such as character encoding and byte encoding. The encoding sequence is coded from left to right and from top to bottom.

Since the encoding method of the two-dimensional code is very mature, the encoding method can refer to the prior art, such as Chinese Patent Application Number CN200810142574.7 filed by Huawei Technologies Co., Ltd., entitled "TWO-DIMENSIONAL CODE ENCODING METHOD, DECODING METHOD AND DEVICE AND TERMINAL"; Chinese Patent Application Number CN201410738445.X filed by Institute of Information Engineering, Chinese Academy of Sciences, the Institute of Information Engineering of the Chinese Academy of Sciences, entitled "TWO-DIMENSIONAL CODE ENCODING AND DECODING METHOD"; Chinese Patent Application Number CN201220269220.0 filed by Wuxi Puzhi Lianke High-tech Co., Ltd., entitled "INDOOR MOBILE ROBOT POSITIONING SYSTEM BASED ON TWO-DIMENSIONAL CODE".

In this embodiment, the coordinate label 2 is composed of a mark at an arbitrary position and at least two marks on the X-axis and the Y-axis centered on the mark. A Cartesian coordinate system is determined by the coordinate label 2, and the position of the mark in the coded label 1 is determined by the Cartesian coordinate system.

In other embodiments, the coordinate label may have other forms, as long as the coordinate label enables the robot to determine the position information of each mark of the coded label, thereby determining the individual road sign by identifying the coded label. Thus, the robot can determine its position.

In this embodiment, the road sign further includes a check label 3. The check label 3 consists of more than one mark. The mark is coated with a conversion material that can be excited to emit light with a specific wavelength. The check label 3 is used to check whether the identity of the individual road sign is correct or not.

The conversion materials coated on the mark of the coded label 1, the mark of the coordinate label 2, and the mark of the check label 3 may be the same or different.

In this embodiment, the mark of the coded label 1, the mark of the coordinate label 2 and the mark of the check label 3 are coated with the same conversion material.

In this embodiment, each road sign is provided with a check label 3 matching the road sign, which has certain error correction capability for the accuracy of the identification of the individual road sign. That is to say, the check label 3 has a certain relationship with the identity of the road sign. If the identity of the identified road sign does not match the identified check label 3, it indicates that there is an error in the identity of the road sign. It is necessary to re-identify the road sign.

The conversion material may be an up-conversion luminescent material or a down-conversion luminescent material.

The up-conversion luminescent material, namely, an anti-stokes material, emits high-energy emitted light after being excited by low-energy excitation light, in other words, the excitation light having a long wavelength and a low frequency excites the material to emit the emitted light having a short wavelength and a high frequency. For example, visible light excites ultraviolet light, yellow light excites blue light, or infrared light excites visible light, such as the conversion material B.

The down-conversion luminescent material, namely, a material conforming to Stokes's law, emits low-energy emitted light after being excited by high-energy excitation light, in other words, excitation light having a short wavelength and a high frequency excites the material to emit the emitted light having a long wavelength and a low frequency. For example, ultraviolet light excites visible light, or blue light excites yellow light, or visible light excites infrared light, such as the conversion material A.

In this embodiment, the conversion material is a fluorescent material.

The conversion material coated on the mark of the coded label 1, the mark of the coordinate mark 2 and the mark of the check label 3 may be the conversion material A, or the conversion material B, or the conversion material C.

In this embodiment, the conversion material C is preferably used as the conversion material because the emitted light is infrared light, which can further reduce the interference caused by the natural light.

In other embodiments, the fluorescent material may be a long-lasting fluorescent material. The long-lasting fluorescent material is a kind of substance which can continue to emit light even after the excitation light source is turned off after absorbing energy of an excitation light source such as visible light, ultraviolet light or X-ray.

For the phosphor mentioned in the Chinese Patent Application No. CN201310109607.9, the matrix material is Zn_{Z}Al_{Y}Si_{X}O_{(Z+1.5Y+2X)} or Zn_{Z}Al_{Y}Ge_{X}O_{(Z+1.5Y+2X)} or Zn_{Z}Ga_{Y}Si_{X}O_{(Z+1.5Y+2X)}, wherein 1≤X≤5, 1≤Y≤5, 1≤Z≤5; the matrix material is doped with 0.001 to 5 mol% of Cr³⁺ and 0.001 to 20 mol% of M, wherein M is one or two of an alkali metal element, an alkaline-earth metal element, and a rare earth element.

When the long-lasting fluorescent material is used, the light energy can be fully absorbed during the day when the light is sufficient. In the early morning, dusk or evening, when the light is insufficient, the long-lasting fluorescent material continues to illuminate to meet the requirements for the robot to identify the road sign.

The road signs are coated with the same conversion material. As long as the robot is provided with a light source and the light source can emit the excitation light of the conversion material, the conversion material can be excited to emit the corresponding emitted light. The robot collects the emitted light, which can effectively identify the identity of the road sign to achieve the purpose of positioning. If the conversion material can excite the emitted light via natural light, the light source on the robot can be omitted.

In addition, since the excitation light of the conversion material and the wavelength of the emitted light of the conversion material are different, the interference of the light emitted by the light source can be effectively eliminated. In the technical solution of using the road sign to reflect the light emitted by the light source and then collecting the reflected light to identify the road sign, if there are other materials having reflection function near the road sign, it is easy to cause misjudgment of the material having reflection function as part of the road sign. Especially when the shape of the material having the reflection function is similar to the shape of the mark of the road sign. The possibility of such a misjudgment is greater, which may lead to increased difficulty in identifying the road signs and cause identification errors.

Since the conversion material needs to emit the emitted light under the excitation of the excitation light, the conversion material should absorb the excitation light as much as possible instead of reflecting the excitation light, so the conversion material coated on the road sign should have a rough surface to reduce the reflection of the excitation light and increase the absorption of the excitation light.

The above description is described by taking the mark coated with the conversion material as an example. In other embodiments, the road sign may be directly made of the conversion material. It is also possible that a part of the mark is made of the conversion material and that a part of the mark is coated with the conversion material.

### Second embodiment

This embodiment provides a road sign for determining the position of the robot. Referring to FIG. 2, this embodiment is different from the first embodiment in that, in this embodiment, the road sign is in the form of a bar code, instead of a road sign in the form of a two-dimensional code in the first embodiment.

The bar code includes a start character 22, a data character 21, and a termination character 22'. Some bar codes are provided with a check character 23 between the data character 21 and the terminating character 22'.

The start character 22 is the first character and has a special structure. When the scanner reads the character, it begins to read the code formally.

The data character 21 is the main content of the bar code, and each bar code has the data character 21 with different content.

The check character 23 is to check whether the read data is correct. Different encoding rules may have different check rules.

The termination character 22' is the last character and has a special structure for notifying that the scanning of the code has been completed.

The start character 22 and the termination character 22' are equivalent to the coordinate label described in the first embodiment. The data character 21 is equivalent to the coded label described in the first embodiment. The check character 23 is equivalent to the check label described in the first embodiment.

The other information of this embodiment may refer to the related content in the first embodiment.

### Third embodiment

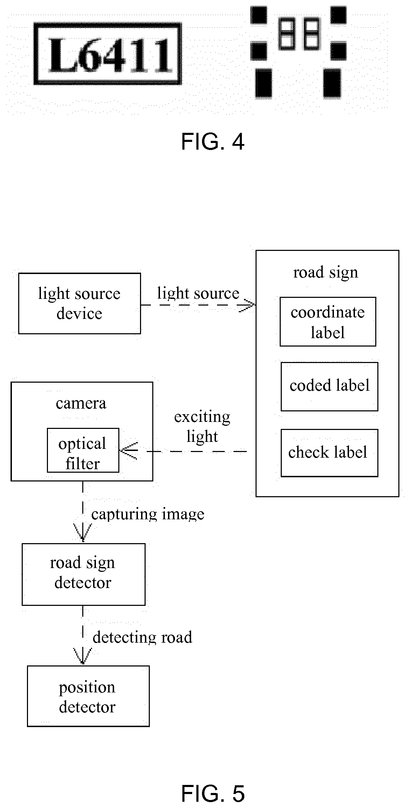

This embodiment provides a road sign for determining the position of the robot. Referring to FIG. 3 and FIG. 4, this embodiment is different from the first and second embodiments in that, in this embodiment, the road sign is based on shape information, numerals, letters, or patterns.

In this embodiment, the road sign may only contain a coded label.

The relevant information of the road signs used in this embodiment refers to the master's thesis of Liu Xiaolong of Beijing University of Technology in April 2012. The title of the thesis is "Research and Embedded Implementation of Indoor Positioning Technology for Mobile Robots Based on Passive Infrared Signposts".

The road sign based on shape information refers to FIG. 3, and the principle is to utilize the feature that the robot vision system can perform color information extraction more quickly and accurately.

The road sign based on numerals or letters, referring to FIG. 4, uses the color information while adding text information composed of a plurality of numerals or letters. The use of color information is to utilize the robot vision system to extract color information more quickly and accurately.

The addition of text information is to expand the expressive ability of the road sign system and to increase the number of road signs that can be distinguished to meet the needs of a complex system.

The artificial road sign based on special patterns adopts different patterns similar to bar codes or two-dimensional codes. Therefore, it is possible to provide more road signs for the robot to perform positioning in a complex environment.

The other information of this embodiment may refer to the related content in the first embodiment and the second embodiment.

### Fourth embodiment

This embodiment provides a road sign for determining the position of the robot. This embodiment is different from the first, second and third embodiments in that, in this embodiment, the labels with different functions are coated with different conversion materials, but each mark of the labels with the same function is coated with the same conversion material.

The road sign in the form of a two-dimensional code of the first embodiment is taken as an example. Referring to FIG. 1, the coded label 1 and the coordinate label 2 are coated with different conversion materials.

The different conversion materials described in the present invention include:
(1) the excitation lights of the different conversion materials are different, but the emitted lights are the same;
(2) the excitation lights of the different conversion materials are different, and the emitted lights are also different;
(3) the excitation lights of the different conversion materials are the same, but the emitted lights are different.

A conversion material having the same excitation light and the same emission light is not a different conversion material in the description of the present invention.

In this embodiment, the coded label 1 is coated with the conversion material B, and the coordinate label 2 is coated with the conversion material A. Adjusting the relevant parameters of the conversion material B and the conversion material A allows the conversion material B and the conversion material A to excite the same emitted light under different excitation lights.

The same emitted light or the same excitation light in this embodiment means that the wavelengths are similar and belong to substantially the same color band, and do not mean that the wavelengths are equal.

In other embodiments, the coded label 1 is coated with the conversion material C, and the coordinate label 2 is coated with the conversion material A. Adjusting the relevant parameters of the conversion material A allows the conversion material C and the conversion material A to excite different emitted lights under the same excitation light.

In other embodiments, the coded label 1 is coated with the conversion material C, and the coordinate label 2 is coated with the conversion material B. Adjusting the relevant parameters of the conversion material B allows the conversion material C and the conversion material B to excite different emitted lights under different excitation lights.

In the prior art, even if the labels with different functions are distinguished by different shapes, it may be difficult to determine the shape of the collected label when the robot captures the road sign at certain positions, or, due to the pixel problem of the camera, the shape of the label is indistinguishable. The purpose of effectively distinguishing the labels with different functions cannot be achieved. Therefore, in the prior art, an algorithm is used for distinguishing the labels with different functions. This approach results in slower identification of the road signs and often needs to eliminate the relevant interference information.

In this embodiment, the labels with different functions use different conversion materials, for example, the conversion material coated on the coded label 1 and the conversion material coated on the coordinate label 2 are different. The coded label 1 and the coordinate label 2 can be distinguished from each other by separately collecting the emitted light of the conversion material coated on the coded label 1 and the emitted light of the conversion material coated on the coordinate label 2. This way is simple and efficient.

In the prior art, in order to distinguish the check label 3, it is necessary to set the check label 3 at a certain position to prevent identification errors.

Similarly, the check label 3 and the other parts of the road sign may be coated with different conversion materials. In this embodiment, the conversion materials coated on the check label 3, the coded label 1 and the coordinate label 2 are different.

In the above description, the labels with the same function are coated with the same conversion material. In other embodiments, the labels with the same function may be coated with different conversion materials. For example, partial marks constituting the coded label 1 and the other marks constituting the coded label 1 may be coated with different conversion materials.

In the above description, all of the marks of the coded label 1, the coordinate label 2 and the check label 3 are coated with the conversion material. In other embodiments, all of the marks of the coded label 1, the coordinate label 2 and the check label 3 are made of the conversion material, or some of the marks are coated with the conversion material, or some of the marks are made of the conversion material.

### Fifth embodiment

This embodiment provides a road sign for determining the position of the robot. This embodiment is different from the first, second, third and fourth embodiments in that, in this embodiment, each mark is coated with two or more conversion materials.

There are the following situations when the mark is coated with only one conversion material.

If the emitted light of the conversion material coated on the mark is infrared light, when the light in the space where the robot is located is reddish in the morning or in the evening, the emitted light of the conversion material is interfered by the red light greatly to influence the identification of the road sign seriously.

In this embodiment, two or more different conversion materials are coated on the mark. In the case that a large amount of the emitted light of one conversion material is interfered, the emitted light of another conversion material may be used, which is beneficial to reduce interference and improve the accuracy of the identification of the road sign.

For example, both the conversion material B and the conversion material C are coated on the same mark. The relevant parameters of the conversion material B are adjusted, such that the excitation light is yellow light and the emitted light is green light. In the case that the infrared light emitted from the blue light excitation conversion material C is easily interfered, the yellow light excitation conversion material B can be used to emit green light.

Of course, the mark may be coated with three or more different conversion materials to further improve the anti-interference ability in the process of identifying the road sign.

In this embodiment, the two or more conversion materials may be laminated on the mark, or may be partially laminated on the mark, or may be applied to different positions of the mark in close proximity to each other or spaced apart from each other.

In the above description, all the marks are coated with the same conversion material. For example, all of the marks are coated with the conversion material B and the conversion material C.

In other embodiments, the labels with different functions are coated with at least one different conversion material.

Taking the road sign in the form of a two-dimensional code of the first embodiment as an example, referring to FIG. 1, each of the marks constituting the coded label 1 is coated with two or more different conversion materials, and at least one of the conversion materials is different from the conversion material of the other parts of the road sign. Each of the marks constituting the coordinate label 2 is coated with two or more different conversion materials, and at least one of the conversion materials is different from the conversion material of the other parts of the road sign.

Similarly, each of the marks constituting the check label 3 is coated with two or more different conversion materials, and at least one of the conversion materials is different from the conversion material of the other parts of the road sign.

This different conversion material can be used to distinguish the labels with different functions.

The above technical solution can effectively prevent interference of other light and can distinguish the labels with different functions.

In the above description, the marks are coated with the conversion material. In other embodiments, the marks may be made of the conversion material, or some of marks are coated with the conversion material, or some of the marks are made of the conversion material.

Other information of this embodiment may refer to the related descriptions in the first embodiment, the second embodiment, the third embodiment, and the fourth embodiment.

### Sixth Embodiment

This embodiment provides a device for determining the position of a robot, comprising the road sign in any one of the first to fifth embodiments, a light source, a camera, a road sign detector, and a position detector.

In this embodiment, the light source, the camera, the road sign detector and the position detector are all disposed on the robot. The road sign is disposed on the ceiling of a space in which the robot is located.

In other embodiments, the road sign may be set in other place where the robot can collect the road sign.

In this embodiment, the device further includes an optical filter. The emitted light excited by the conversion material is permeable to the optical filter. The camera collects the light passing through the optical filter to capture the road sign, which can reduce interference of other light.

In this embodiment, referring to the first embodiment, the second embodiment and the third embodiment, the road sign is coated with a conversion material, such as the conversion material A. The light source projects light onto the road sign such that the conversion material excites light with a specific wavelength, that is, the light source projects blue light to the road sign. The road sign excites green light. By using an optical filter permeable to green light, the camera captures the green light that passes through the optical filter to obtain a binary image of the road sign.

Similarly, if the road sign is coated with the conversion material B, the parameters of the conversion material B are adjusted so that the excitation light is yellow light and the emitted light is green light. The light source projects yellow light to the road sign. The road sign excites green light. By using an optical filter permeable to green light, the camera captures the green light that passes through the optical filter to obtain a binary image of the road sign.

Similarly, if the road sign is coated with the conversion material C, the excitation light is blue light and the emitted light is infrared light. The light source projects blue light to the road sign. The road sign excites infrared light. By using an optical filter permeable to infrared light, the camera captures the infrared light that passes through the optical filter to obtain a binary image of the road sign.

After obtaining the binary image of the road sign, the road sign detector identifies the road sign according to the image of the road sign collected by the camera. The position detector determines the position of the robot by the road sign identified by the road sign detector.

In other embodiments, referring to the fourth embodiment, the labels with different functions are coated with different conversion materials. Referring to FIG. 1, for example, the coded label 1, the coordinate label 2 and the check label 3 are coated with different conversion materials.

If the excitation lights of the conversion materials are different, in order to enable all of the conversion materials to be excited, the number of the light sources is two or more. The wavelengths of the light emitted by the respective light sources are different, or the light source is capable of adjusting the wavelength of the light.

The light source should be capable of emitting the excitation lights of all of the conversion materials. If the excitation lights of all the conversion materials are the same, the light source can emit only the excitation light. If the excitation lights of all the conversion materials are different, the light source should emit at least three lights corresponding to the excitation lights of these conversion materials.

Correspondingly, optical filters permeable to the emitted lights of these conversion materials should be used. When the coded label 1, the coordinate label 2 and the check label 3 are coated with different conversion materials and the different conversion materials have different emitted lights, three kinds of optical filters should be used, corresponding to the three emitted lights. If the emitted lights of the different conversion materials are the same, only one kind of optical filter permeable to the emitted light is used.

When the number of the optical filters is two or more, the optical filters may be switched manually or mechanically automatically.

The optical filter may be only one, but different portions of the optical filter may be permeable to different lights. For example, a portion of the optical filter is permeable to infrared light, and another portion of the optical filter is permeable to green light.

In other embodiments, referring to the fifth embodiment, each of the marks is coated with two or more different conversion materials. The light source should be able to emit the corresponding excitation lights of the conversion materials. Similarly, the optical filter should be permeable to the emitted lights corresponding to the conversion materials.

In summary, the light source and the optical filter should correspond to the conversion material coated on the road sign. The light source can emit the excitation light of the conversion material. The optical filter is permeable to the emitted light of the conversion material.

In this embodiment, the device includes a light sensor that can detect light around the robot for detecting the intensity of light in various bands to determine which conversion material to excite.

For example, the light sensor detects that there is more red light in the space where the robot is located, at this time, when the conversion material C is excited to emit infrared light, there will be more interference. The information obtained by the light sensor determines which conversion material is excited to minimize the interference of other light.

In the above description, the marks are coated with the conversion material. In other embodiments, the marks may be made of the conversion material, or some of marks are coated with the conversion material, or some of the marks are made of the conversion material.

The other related information of this embodiment may refer to the related descriptions of the first to fifth embodiments.

### Seventh embodiment

This embodiment provides a method of distinguishing labels with different functions in a road sign.

The road sign has more than one label with different functions. The labels with different functions are coated with different conversion materials.

The method includes:
(1) Projecting an excitation light onto the road sign such that a conversion material in the road sign excites the emitted light.
   Referring to the sixth embodiment, the light source emits an excitation light onto the road sign, and the excitation light can excite at least one of the conversion materials on the road sign to emit the emitted light.
   Since the labels with different functions are coated with different conversion materials, a certain conversion material corresponds to a certain label.
   The light source may emit corresponding light according to the different excitation light of the conversion material. The light source may excite the conversion material on a label as needed for the conversion material to excite the emitted light.
   For example, referring to FIG. 1, the conversion material A is coated on the coded label 1; the conversion material B is coated on the coordinate label 2, and the relevant parameters of the conversion material B are adjusted so that the excitation light is yellow light. The conversion material C is coated on the check label 3.
   If it is necessary to collect the image of the coordinate label 2, the light source should emit yellow light. At this time, the conversion material B emits green light under the excitation of the yellow light. Because the conversion material A and the conversion material C cannot be excited by the yellow light, the corresponding emitted light is not emitted.
   Similarly, if the coded label 1 or the check label 3 is to be collected, the light source should emit blue light. At this time, since the excitation lights of the two are the same, the coded label 1 or the check label 3 cannot be discriminated by the excitation light. The discrimination should be performed by means of an optical filter.
(2) Selecting an optical filter, the emitted light in the step 1 can pass through the optical filter.
   After the conversion material of the label excites the emitted light, the emitted light should be collected to obtain an image of the corresponding label.
   For example, when the image of the coordinate label 2 is collected, because the excitation light of the coordinate label 2 is yellow light and the emitted light is green light, the optical filter permeable to green light is used to filter light, and only the image of the coordinate label 2 can be collected. The coded label 1 and the check label 3 are not excited by yellow light and do not emit the emitted light, so the images of the coded label 1 and the check label 3 are not collected. At this time, as long as the collected image is marked, the coordinate label 2 in the road sign can be identified. It does not need to be implemented through a complicated algorithm.
   Similarly, when the coded label 1 is collected, the conversion material can be excited by blue light. The filter is permeable to green light. At this time, the conversion material A on the coordinate label 2 is not excited, and the conversion material C on the check label 3 can be excited, but the emitted light of the conversion material C is infrared light and cannot pass through the optical filter. Therefore, only the image of the coded label 1 can be collected. At this time, as long as the collected image is marked, the coded label 1 in the road sign can be identified. It does not need to be implemented through a complicated algorithm.
   Similarly, when the check label 3 is collected, the conversion material may be excited by blue light. The optical filter is permeable to infrared light. At this time, the conversion material A on the coordinate label 2 is not excited. Although the conversion material A on the coded label 1 can be excited, the emitted light of the conversion material A is green light and cannot pass through the optical filter, so that only the image of the check label 3 can be collected. At this time, as long as the collected image is marked, the check label 3 in the road sign can be identified. It does not need to be implemented through a complicated algorithm.
(3) Using the camera to collect the emitted light passing through the optical filter in step 2 so that an image of a corresponding label is obtained, and the corresponding label is marked.
   Since the camera can only collect the light passing through the optical filter, the labels with different functions can be collected step by step and marked to achieve the purpose of distinguishing the labels with different functions.
(4) Repeating steps 1 through 3 until all the labels with different functions in the road sign are collected and marked.
   There is more than one label with different functions in the road sign. When there are two or more kinds of labels in the road sign, each label needs to be collected step by step. The related method is the same as steps 1 to 3, as long as steps 1 to 3 are repeated. However, the light emitted by the light source and the optical filter can be adjusted accordingly to complete the image collection of all the labels.
(5) Combining the images of all the collected labels into one image.

Since the labels in the road signs are collected step by step, that is, each label has a separate image, it is impossible to identify the road signs as a whole. Therefore, all the collected separate images need to be combined to obtain a complete image of the road sign.

In addition, since each label has been marked, it is not necessary to distinguish by an algorithm. The purpose of obtaining an overall image of the road sign is achieved, and different labels can be effectively distinguished.

In this embodiment, after step 5, the image obtained in step 5 is further identified to determine the location where the robot is located.

In the above description, the marks are coated with the conversion material. In other embodiments, the marks may be made of the conversion material, or some of marks are coated with the conversion material, or some of the marks are made of the conversion material.

The other related information of this embodiment may refer to the related descriptions of the first to sixth embodiments.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A road sign for determining the position of a robot, the road sign consisting of more than one label with different functions, the label consisting of more than one mark, the mark being coated with a conversion material capable of exciting light with a specific wavelength or made of the conversion material.

2. The road sign as claimed in claim 1, wherein the road sign includes:
a coded label (1), the coded label (1) consisting of more than one mark for determining an individual road sign to distinguish the individual road sign from other road signs; and
a coordinate label (2), the coordinate label (2) consisting of more than one mark for determining position information of each mark of the coded label (1).

3. The road sign as claimed in claim 2, wherein the coordinate label (2) is composed of a mark at an arbitrary position and at least two marks on an X-axis and a Y-axis centered on the mark.

4. The road sign as claimed in claim 2, wherein the road sign is in the form of a two-dimensional code or in the form of a bar code.

5. The road sign as claimed in claim 1, wherein the road sign is based on shape information, numerals, letters, or patterns.

6. The road sign as claimed in any one of claims 2-5, wherein the road sign further includes a check label (3), the check label (3) consists of more than one mark, and the check label (3) is used to check whether the identity of the individual road sign is correct or not.

7. The road sign as claimed in claim 1, wherein the conversion material is an up-conversion luminescent material or a down-conversion luminescent material.

8. The road sign as claimed in claim 7, wherein the conversion material is a luminescent material.

9. The road sign as claimed in claim 8, wherein the luminescent material is a long-lasting luminescent material.

10. The road sign as claimed in claim 1, wherein the label with different functions is coated with different conversion materials or made of different conversion materials.

11. The road sign as claimed in claim 1, wherein each mark is coated with more than two different conversion materials or made of more than two different conversion materials.

12. The road sign as claimed in claim 11, wherein at least one of the conversion materials coated on the label with different functions is a different conversion material; or
at least one of the conversion materials that make the label with different functions is a different conversion material.

13. The road sign as claimed in claim 1, wherein the conversion material has a rough surface.

14. The road sign as claimed in claim 1, wherein the conversion material is a material having a β-sialon represented by the formula Si_{6-z}Al_{z}O_{z}N_{8-z} as a matrix, in which Eu and R elements are solid solutions in the matrix; wherein 0.2≤z≤2.0, the R element is one or two of Y, Sc, La, Gd, and Lu; molar composition of the Eu and R elements satisfies the following condition: 0.8≤(Eu/Eu+R)<1.

15. The road sign as claimed in claim 1, wherein the conversion material is a material of the formula M₂Y₈₍GeO₄)₆S₂:xHo³⁺, wherein the value of x is 0.01 to 0.06.

16. The road sign as claimed in claim 1, wherein the conversion material is a material of the formula Ca_{2.83}Sc₂Si₃O₁₂:0.1Ce³⁺, 0.07Nd³⁺.

17. A device for determining the position of a robot, comprising:
the road sign as claimed in any one of claims 1-16, the road sign being disposed in a space in which the robot is located;
a light source, the light source projecting light onto the road sign such that the conversion material excites light with a specific wavelength;
a camera, the camera capturing the road sign and obtaining a binary image;
a road sign detector, the road sign detector identifying the road sign according to the image of the road sign collected by the camera; and
a position detector, the position detector determining the position of the robot through the road sign identified by the road sign detector.

18. The device as claimed in claim 17, further comprising an optical filter, the emitted light excited by the conversion material being permeable to the optical filter, the camera collecting the light passing through the optical filter to capture the road sign.

19. The device as claimed in claim 18, wherein the optical filter includes two or more optical filters; or the optical filter has a plurality of portions, each portion is permeable to different light.

20. The device as claimed in claim 19, wherein the two or more optical filters are switched manually or mechanically automatically.

21. The device as claimed in claim 17, further comprising a light sensor for detecting light around the robot.

22. The device as claimed in claim 17, wherein the light source includes two or more light sources, and the wavelengths of the light emitted by the respective light sources are different; or the light source is capable of adjusting the wavelength of the light.

23. The device as claimed in claim 17, wherein the light source, the camera, the optical filter, the road sign detector and the position detector are all disposed on the robot, and the road sign is disposed on a ceiling of an indoor space.

24. A method for distinguishing labels with different functions in a road sign, the labels with different functions being coated with different conversion materials or made of different conversion materials, the conversion materials exciting light with a specific wavelength, **characterized in that** the method comprises:
(1) projecting an excitation light onto the road sign such that one of the conversion materials of the road sign excites emitted light;
(2) selecting an optical filter, the emitted light in the step 1 being permeable to the optical filter;
(3) using a camera to collect the emitted light passing through the optical filter in step 2 so that an image of a corresponding one of the labels is obtained and the corresponding label is marked;
(4) repeating steps 1 through 3 until all the labels with different functions in the road sign are collected and marked;
(5) combining the images of all the collected labels into one image.

25. The method as claimed in claim 24, after step 5 further comprising:
identifying the image obtained in step 5 for determining the location where the robot is located.
